# EUROPEAN PATENT APPLICATION

(11) **EP 3 825 653 A1**
(43) Date of publication of application: **26.05.2021**
(21) Application number: 20208135.2
(22) Date of filing: 17.11.2020
(51) Int. Cl.: G01C 21/32, G05D 1/00, G08G 1/00

(54) **NAVIGATION SYSTEM WITH LANE ESTIMATION MECHANISM AND METHOD OF OPERATION THEREOF**

(30) Priority: 22.11.2019 US 201916692808
(71) Applicant: TeleNav, Inc., Santa Clara, CA 95054 (US)
(72) Inventor: SHAIKH, Tabrez Shafiq, San Jose, CA California 95125 (US); HABIB, Md Ahsan, Santa Clara, CA California 95051 (US); HOU, Chih-Lung, Saratoga, CA California 95070 (US)
(74) Representative: Kretschmann, Dennis

(57) **Abstract**

A navigation system (100) includes: generating a rear facing camera image (450) representing a field of view (232) of the rear facing camera (230) including a current roadway (206) on which the user vehicle (212) is traveling; generating a distortion adjustment rear facing image (462) based on the rear facing camera image (450); identifying lane pixels (466) based on correlation of image pixels (452) of the distortion adjustment rear facing image (462) to lane markings of the current roadway (206); generating a road lane model (202) including a lane delineation estimation (204) based on the lane pixels (466); and calculating a lane position (208) for the user vehicle (212) according to the lane delineation estimation (204).

## Description

### TECHNICAL FIELD

An embodiment of the present invention relates generally to a navigation system, and more particularly to a system for roadway lane estimation.

### BACKGROUND

Modern consumer and industrial electronics, especially devices such as graphical navigation systems, cellular phones, and vehicle integrated navigation and computing systems, are providing increasing levels of functionality to support modern life, including navigation and route guidance services. Research and development in the existing technologies can take a myriad of different directions.

As users become more empowered with the growth of navigation devices and vehicle based navigation services, new and old paradigms begin to take advantage of this new device space. There are many technological solutions to take advantage of this new device capability to enhance or augment navigation and route guidance. However, users are often not provided with the ability to automatically determine a vehicle lane position while using a vehicle during various road conditions.

Thus, a need still remains for a navigation system with a roadway lane estimation mechanism for operator awareness while using a navigation system. In view of the ever-increasing commercial competitive pressures, along with growing consumer expectations and the diminishing opportunities for meaningful product differentiation in the marketplace, it is increasingly critical that answers be found to these problems. Additionally, the need to reduce costs, improve efficiencies and performance, and meet competitive pressures adds an even greater urgency to the critical necessity for finding answers to these problems.

Solutions to these problems have been long sought but prior developments have not taught or suggested any solutions and, thus, solutions to these problems have long eluded those skilled in the art.

### SUMMARY

An embodiment of the present invention provides a navigation system, including: a communication unit configured to communicate with a rear facing camera of a user vehicle; and a control unit, coupled to the communication unit, configured to: generate a rear facing camera image representing a field of view of the rear facing camera including a current roadway on which the user vehicle is traveling; generate a distortion adjustment rear facing image based on the rear facing camera image; identify lane pixels based on correlation of image pixels of the distortion adjustment rear facing image to lane markings of the current roadway; generate a road lane model including a lane delineation estimation based on the lane pixels; and calculate a lane position for the user vehicle according to the lane delineation estimation.

An embodiment of the present invention provides a method of operation of a navigation system including: generating a rear facing camera image representing a field of view of the rear facing camera including a current roadway on which the user vehicle is traveling; generating a distortion adjustment rear facing image based on the rear facing camera image; identifying lane pixels based on correlation of image pixels of the distortion adjustment rear facing image to lane markings of the current roadway; generating a road lane model including a lane delineation estimation based on the lane pixels; and calculating a lane position for the user vehicle according to the lane delineation estimation.

An embodiment of the present invention provides a non-transitory computer readable medium including instructions executable by a control circuit for a navigation system, the instructions including: generating a rear facing camera image representing a field of view of the rear facing camera including a current roadway on which the user vehicle is traveling; generating a distortion adjustment rear facing image based on the rear facing camera image; identifying lane pixels based on correlation of image pixels of the distortion adjustment rear facing image to lane markings of the current roadway; generating a road lane model including a lane delineation estimation based on the lane pixels; and calculating a lane position for the user vehicle according to the lane delineation estimation.

Certain embodiments of the invention have other steps or elements in addition to or in place of those mentioned above. The steps or elements will become apparent to those skilled in the art from a reading of the following detailed description when taken with reference to the accompanying drawings.

### BRIEF DESCRIPTION OF THE DRAWINGS

FIG. 1 is a navigation system with vehicle position estimation mechanism in an embodiment of the present invention.
FIG. 2 is an example of a representation of a road lane model of the navigation system.
FIG. 3 is an exemplary block diagram of the navigation system.
FIG. 4 is a control flow of the navigation system.
FIG. 5 is a flow chart of a method of operation of a navigation system in an embodiment of the present invention.

### DETAILED DESCRIPTION

The following embodiments are described in sufficient detail to enable those skilled in the art to make and use the invention. It is to be understood that other embodiments would be evident based on the present disclosure, and that system, process, or mechanical changes may be made without departing from the scope of an embodiment of the present invention.

In the following description, numerous specific details are given to provide a thorough understanding of the invention. However, it will be apparent that the invention may be practiced without these specific details. In order to avoid obscuring an embodiment of the present invention, some well-known circuits, system configurations, and process steps are not disclosed in detail.

The drawings showing embodiments of the system are semi-diagrammatic, and not to scale and, particularly, some of the dimensions are for the clarity of presentation and are shown exaggerated in the drawing figures. Similarly, although the views in the drawings for ease of description generally show similar orientations, this depiction in the figures is arbitrary for the most part. Generally, the invention can be operated in any orientation.

The term "module" referred to herein can include software, hardware, or a combination thereof in an embodiment of the present invention in accordance with the context in which the term is used. For example, the software can be machine code, firmware, embedded code, and application software. Also for example, the hardware can be circuitry, processor, computer, integrated circuit, integrated circuit cores, a pressure sensor, an inertial sensor, a microelectromechanical system (MEMS), passive devices, or a combination thereof. Further, if a module is written in the apparatus claims section below, the modules are deemed to include hardware circuitry for the purposes and the scope of apparatus claims.

The modules in the following description of the embodiments can be coupled to one other as described or as shown. The coupling can be direct or indirect without or with, respectively, intervening items between coupled items. The coupling can be physical contact or by communication between items.

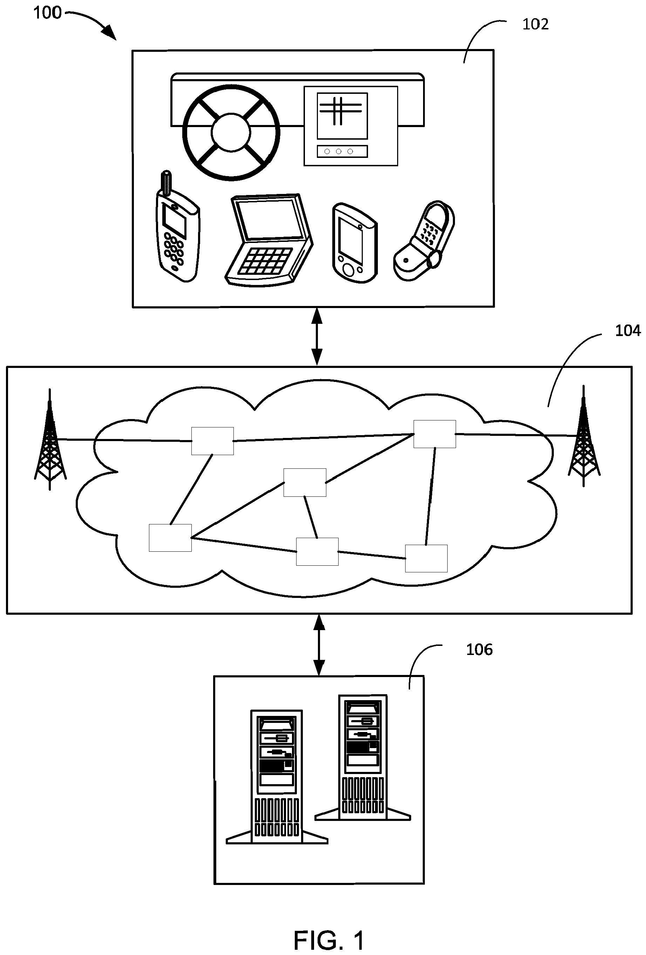

Referring now to FIG. 1, therein is shown a navigation system 100 with vehicle position estimation mechanism in an embodiment of the present invention. The navigation system 100 includes a first device 102, such as a client or a server, connected to a second device 106, such as a client or server. The first device 102 can communicate with the second device 106 with a communication path 104, such as a wireless or wired network.

For example, the first device 102 can be of any of a variety of computing devices, such as a cellular phone, a tablet computer, a smart phone, a notebook computer, vehicle embedded navigation system, or computing device. The first device 102 can couple, either directly or indirectly, to the communication path 104 to communicate with the second device 106 or can be a stand-alone device.

The second device 106 can be any of a variety of centralized or decentralized computing devices, sensor devices to take measurements or record environmental information, such as sensor instruments, sensor equipment, or a sensor array. For example, the second device 106 can be a multimedia computer, a laptop computer, a desktop computer, grid-computing resources, a virtualized computer resource, cloud computing resource, routers, switches, peer-to-peer distributed computing devices, or a combination thereof.

The second device 106 can be mounted externally or internally to a vehicle, centralized in a single room or within a vehicle, distributed across different rooms, distributed across different geographical locations, embedded within a telecommunications network. The second device 106 can couple with the communication path 104 to communicate with the first device 102.

For illustrative purposes, the navigation system 100 is described with the second device 106 as a computing device, although it is understood that the second device 106 can be different types of devices, such as a standalone sensor or measurement device. Also for illustrative purposes, the navigation system 100 is shown with the second device 106 and the first device 102 as end points of the communication path 104, although it is understood that the navigation system 100 can have a different partition between the first device 102, the second device 106, and the communication path 104. For example, the first device 102, the second device 106, or a combination thereof can also function as part of the communication path 104.

The communication path 104 can span and represent a variety of networks and network topologies. For example, the communication path 104 can include wireless communication, wired communication, optical, ultrasonic, or the combination thereof. Satellite communication, cellular communication, Bluetooth, Infrared Data Association standard (IrDA), wireless fidelity (WiFi), and worldwide interoperability for microwave access (WiMAX) are examples of wireless communication that can be included in the communication path 104. Ethernet, digital subscriber line (DSL), fiber to the home (FTTH), and plain old telephone service (POTS) are examples of wired communication that can be included in the communication path 104. Further, the communication path 104 can traverse a number of network topologies and distances. For example, the communication path 104 can include direct connection, personal area network (PAN), local area network (LAN), metropolitan area network (MAN), wide area network (WAN), or a combination thereof.

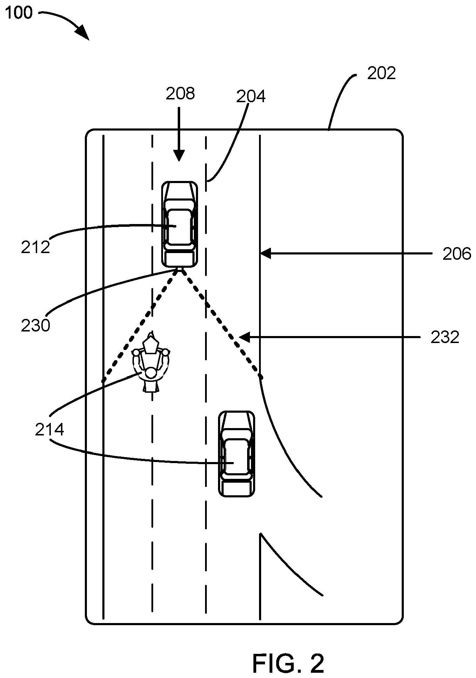

Referring now to FIG. 2, therein is shown a representation of a road lane model 202 of the navigation system 100. The road lane model 202 is an estimation of the lanes on a roadway. For example, the road lane model 202 can be localized to the geographic location around a user vehicle 212. The user vehicle 212 can be a vehicle occupied by the system user (not shown) of the first device 102 of FIG. 1, such as the occupant or operator of the user vehicle 212.

The road lane model 202 can include lane delineation estimations 204 for the lanes on a roadway relative to the location of a user vehicle 212. The lane delineation estimations 204 are estimations or approximations of lanes that divide vehicle traffic on the roadway. For example, the road lane model 202 can be localized to include the lane delineation estimations 204 for a current roadway 206, which is the roadway on which the user vehicle 212 is currently travelling. For example, the current roadway 206 can be a street, an alleyway, a highway, or unpaved path.

In general, the lane delineation estimations 204 can correspond with the actual lane delineations on the road. For example, reference objects in the environment around the user vehicle 212 can be used as a basis for alignment for the lane delineation estimations 204. The reference objects, for example, can include painted lane marking, raised pavement markers, reflective lane markers, traffic barriers, pylons, cones, flares, illuminators, other markings or features that indicate the existence of a traffic lane, or a combination thereof. As another example, the reference objects can include physical features of the roadway including gaps or edges between concrete or paved segments; metallic rails for trolleys or cable cars that embedded or integrated with the road way; changes in or transitions between the road surface such as from an asphalt, concrete, or paved surface to a gravel or unpaved surface which generally exist along the edge of a roadway; or a combination thereof.

In some embodiments, the navigation system 100 can generate the road lane model 202 based on information received from a rear facing camera 230. As example, the rear facing camera 230 can be mounted to the back or rear of the user vehicle 212 or integrated with a part of the body of the rear of the user vehicle 212. The rear facing camera 230 can include the field of view 232 that faces away from the rear of the user vehicle 212. As an example, the field of view 232 for the rear facing camera 230 can include a view of a portion of the current roadway 206 on which the user vehicle 212 is currently traveling. In some embodiments, in use of information from the rear facing camera 230, the navigation system 100 can generate the road lane model 202 in conjunction with global positioning system data, map data that includes road feature information, such as lane count for the current road segment ahead of the user vehicle 212, behind the user vehicle 212, or a combination thereof. Details regarding generation of the road lane model 202 will be discussed below.

The environment around the to the user vehicle 212 can include proximately located vehicles 214. The proximately located vehicles 214 are vehicles within proximity to the user vehicle 212. For example, the proximately located vehicles 214 can be a vehicle that is within a specific range or distance of the user vehicle 212. As another example, the proximately located vehicles 214 can be vehicles that are within the field of view 232 of the rear facing camera 230 of the user vehicle 212.

In some embodiments, the navigation system 100 can calculate information about the proximately located vehicles 214 based on the information from the rear facing camera 230. Examples of the information about the proximately located vehicles 214 can include a relative location, which is the position of the proximately located vehicles 214 relative to the user vehicle 212; a relative distance, which is the distance between the proximately located vehicles 214 and the user vehicle 212; a vehicle trajectory of the proximately located vehicles 214, such as the cardinal direction the proximately located vehicles 214 is traveling; a vehicle type of the proximately located vehicles 214, or a combination thereof.

The vehicle type is a general category or classification of a vehicle. For example, the vehicle type can be general category of vehicle such as a bicycle, a motorized scooter, a motorcycle, a car, truck, a sport utility vehicle, a van, a bus, a recreational camper vehicle, a tractor trailer, or a construction vehicle. To further the example, the vehicle type can include specific classifications, such as emergency vehicles, which can be further distinguished as police vehicles, fire fighting vehicles, or medical response vehicles.

As a specific example, FIG. 2 depicts one of a proximate vehicle representation, which can be graphical representations of the proximately located vehicle 214 on a display interface, with the vehicle type as a motorcycle traveling in a lane splitting or lane straddling movement or motion pattern based on the relative location, a lane position, or a combination thereof for the motorcycle. More specifically, the lane splitting or lane straddling for the lane position can be depicted by the proximate vehicle representation 222 of the motorcycle traveling along an edge of, between, or a combination thereof of the instances of the lanes of the current roadway 206.

The road lane model 202 can be used by the navigation system 100 to determine a lane position 208 of the user vehicle 212 on the current roadway 206. The lane position 208 identifies the lane of the current roadway 206 in which the user vehicle 212 is located. Details for calculating the lane position 208 of the user vehicle 212 based on the road lane model 202 will be discussed below.

In some embodiments, the road lane model 202 can be used by the navigation system 100 to operate the user vehicle 212. For example, the navigation system 100 can use the road lane model 202 to maintain or change the lane position 208 during autonomous or semi-autonomous operation of the user vehicle 212. Details regarding the autonomous operation of the user vehicle 212 will be discussed below.

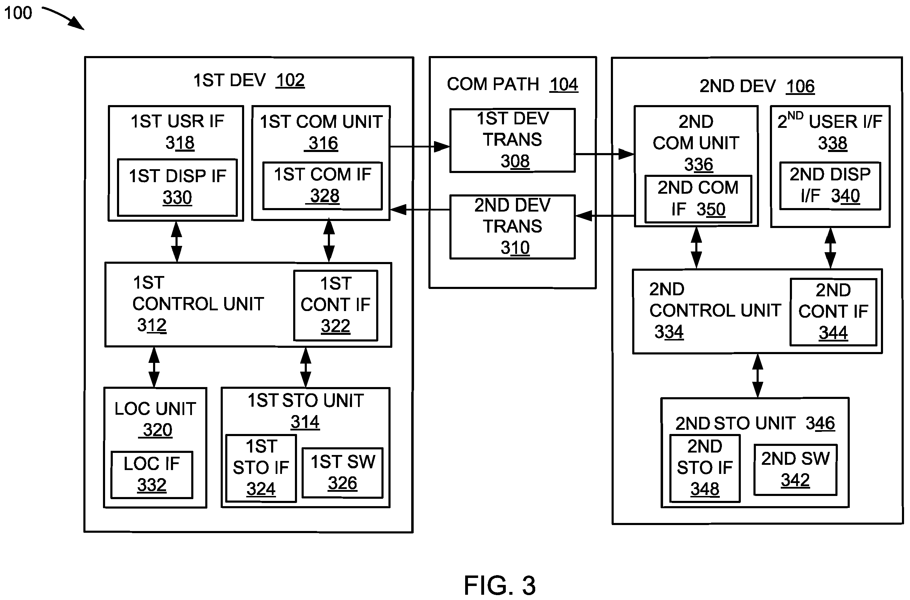

Referring now to FIG. 3, therein is shown an exemplary block diagram of the navigation system 100. The navigation system 100 can include the first device 102, the communication path 104, and the second device 106. The first device 102 can send information in a first device transmission 308 over the communication path 104 to the second device 106. The second device 106 can send information in a second device transmission 310 over the communication path 104 to the first device 102.

For illustrative purposes, the navigation system 100 is shown with the first device 102 as a client device, although it is understood that the navigation system 100 can have the first device 102 as a different type of device. For example, the first device 102 can be a server having a display interface.

Also for illustrative purposes, the navigation system 100 is shown with the second device 106 as a server, although it is understood that the navigation system 100 can have the second device 106 as a different type of device. For example, the second device 106 can be a client device.

For brevity of description in this embodiment of the present invention, the first device 102 will be described as a client device and the second device 106 will be described as a server device. The embodiment of the present invention is not limited to this selection for the type of devices. The selection is an example of an embodiment of the present invention.

The first device 102 can include a first control unit 312, a first storage unit 314, a first communication unit 316, a first user interface 318, and location unit 320. The first control unit 312 can include a first control interface 322. The first control unit 312 can execute a first software 326 to provide the intelligence of the navigation system 100.

The first control unit 312 can be implemented in a number of different manners. For example, the first control unit 312 can be a processor, an application specific integrated circuit (ASIC) an embedded processor, a microprocessor, a hardware control logic, a hardware finite state machine (FSM), a digital signal processor (DSP), or a combination thereof. The first control interface 322 can be used for communication between the first control unit 312 and other functional units in the first device 102. The first control interface 322 can also be used for communication that is external to the first device 102.

The first control interface 322 can receive information from the other functional units or from external sources, or can transmit information to the other functional units or to external destinations. The external sources and the external destinations refer to sources and destinations external to the first device 102.

The first control interface 322 can be implemented in different ways and can include different implementations depending on which functional units or external units are being interfaced with the first control interface 322. For example, the first control interface 322 can be implemented with a pressure sensor, an inertial sensor, a microelectromechanical system (MEMS), optical circuitry, waveguides, wireless circuitry, wireline circuitry, or a combination thereof.

The location unit 320 can generate location information, current heading, and current speed of the first device 102, as examples. The location unit 320 can be implemented in many ways. For example, the location unit 320 can function as at least a part of a global positioning system (GPS) such as a GPS receiver, an inertial navigation system, a cellular-tower location system, a pressure location system, or any combination thereof.

The location unit 320 can include a location interface 332. The location interface 332 can be used for communication between the location unit 320 and other functional units in the first device 102. The location interface 332 can also be used for communication that is external to the first device 102.

The location interface 332 can receive information from the other functional units or from external sources, or can transmit information to the other functional units or to external destinations. The external sources and the external destinations refer to sources and destinations physically separate from the first device 102.

The location interface 332 can include different implementations depending on which functional units or external units are being interfaced with the location unit 320. The location interface 332 can be implemented with technologies and techniques similar to the implementation of the first control interface 322.

The first storage unit 314 can store the first software 326. The first storage unit 314 can also store the relevant information. For example, first storage unit 314 can store information such as the road lane model 202 of FIG. 2.

The first storage unit 314 can be a volatile memory, a nonvolatile memory, an internal memory, an external memory, or a combination thereof. For example, the first storage unit 314 can be a nonvolatile storage such as non-volatile random access memory (NVRAM), Flash memory, disk storage, or a volatile storage such as static random access memory (SRAM).

The first storage unit 314 can include a first storage interface 324. The first storage interface 324 can be used for communication between and other functional units in the first device 102. The first storage interface 324 can also be used for communication that is external to the first device 102.

The first storage interface 324 can receive information from the other functional units or from external sources, or can transmit information to the other functional units or to external destinations. The external sources and the external destinations refer to sources and destinations external to the first device 102.

The first storage interface 324 can include different implementations depending on which functional units or external units are being interfaced with the first storage unit 314. The first storage interface 324 can be implemented with technologies and techniques similar to the implementation of the first control interface 322.

The first communication unit 316 can enable external communication to and from the first device 102. For example, the first communication unit 316 can permit the first device 102 to communicate with the second device 106 of FIG. 1, an attachment, such as a peripheral device or a computer desktop, and the communication path 104.

The first communication unit 316 can also function as a communication hub allowing the first device 102 to function as part of the communication path 104 and not limited to be an end point or terminal unit to the communication path 104. The first communication unit 316 can include active and passive components, such as microelectronics or an antenna, for interaction with the communication path 104.

The first communication unit 316 can include a first communication interface 328. The first communication interface 328 can be used for communication between the first communication unit 316 and other functional units in the first device 102. The first communication interface 328 can receive information from the other functional units or can transmit information to the other functional units.

The first communication interface 328 can include different implementations depending on which functional units are being interfaced with the first communication unit 316. The first communication interface 328 can be implemented with technologies and techniques similar to the implementation of the first control interface 322.

The first user interface 318 allows a user (not shown) to interface and interact with the first device 102. The first user interface 318 can include an input device and an output device. Examples of the input device of the first user interface 318 can include a keypad, a touchpad, soft-keys, a keyboard, a microphone, an infrared sensor for receiving remote signals, or any combination thereof to provide data and communication inputs.

The first user interface 318 can include a first display interface 330. The first display interface 330 can include a display, a projector, a video screen, a speaker, or any combination thereof.

The first control unit 312 can operate the first user interface 318 to display information generated by the navigation system 100. The first control unit 312 can also execute the first software 326 for the other functions of the navigation system 100. The first control unit 312 can further execute the first software 326 for interaction with the communication path 104 via the first communication unit 316.

The second device 106 can be optimized for implementing an embodiment of the present invention in a multiple device embodiment with the first device 102. The second device 106 can provide the additional or higher performance processing power compared to the first device 102. The second device 106 can include a second control unit 334, a second communication unit 336, and a second user interface 338.

The second user interface 338 allows a user (not shown) to interface and interact with the second device 106. The second user interface 338 can include an input device and an output device. Examples of the input device of the second user interface 338 can include a keypad, a touchpad, soft-keys, a keyboard, a microphone, or any combination thereof to provide data and communication inputs. Examples of the output device of the second user interface 338 can include a second display interface 340. The second display interface 340 can include a display, a projector, a video screen, a speaker, or any combination thereof.

The second control unit 334 can execute a second software 342 to provide the intelligence of the second device 106 of the navigation system 100. The second software 342 can operate in conjunction with the first software 326. The second control unit 334 can provide additional performance compared to the first control unit 312.

The second control unit 334 can operate the second user interface 338 to display information. The second control unit 334 can also execute the second software 342 for the other functions of the navigation system 100, including operating the second communication unit 336 to communicate with the first device 102 over the communication path 104.

The second control unit 334 can be implemented in a number of different manners. For example, the second control unit 334 can be a processor, an embedded processor, a microprocessor, hardware control logic, a hardware finite state machine (FSM), a digital signal processor (DSP), or a combination thereof.

The second control unit 334 can include a second controller interface 344. The second controller interface 344 can be used for communication between the second control unit 334 and other functional units in the second device 106. The second controller interface 344 can also be used for communication that is external to the second device 106.

The second controller interface 344 can receive information from the other functional units or from external sources, or can transmit information to the other functional units or to external destinations. The external sources and the external destinations refer to sources and destinations external to the second device 106.

The second controller interface 344 can be implemented in different ways and can include different implementations depending on which functional units or external units are being interfaced with the second controller interface 344. For example, the second controller interface 344 can be implemented with a pressure sensor, an inertial sensor, a microelectromechanical system (MEMS), optical circuitry, waveguides, wireless circuitry, wireline circuitry, or a combination thereof.

A second storage unit 346 can store the second software 342. The second storage unit 346 can also store the information for generating the interface map 218 of FIG. 2. The second storage unit 346 can be sized to provide the additional storage capacity to supplement the first storage unit 314.

For illustrative purposes, the second storage unit 346 is shown as a single element, although it is understood that the second storage unit 346 can be a distribution of storage elements. Also for illustrative purposes, the navigation system 100 is shown with the second storage unit 346 as a single hierarchy storage system, although it is understood that the navigation system 100 can have the second storage unit 346 in a different configuration. For example, the second storage unit 346 can be formed with different storage technologies forming a memory hierarchal system including different levels of caching, main memory, rotating media, or off-line storage.

The second storage unit 346 can be a volatile memory, a nonvolatile memory, an internal memory, an external memory, or a combination thereof. For example, the second storage unit 346 can be a nonvolatile storage such as non-volatile random access memory (NVRAM), Flash memory, disk storage, or a volatile storage such as static random access memory (SRAM).

The second storage unit 346 can include a second storage interface 348. The second storage interface 348 can be used for communication between other functional units in the second device 106. The second storage interface 348 can also be used for communication that is external to the second device 106.

The second storage interface 348 can receive information from the other functional units or from external sources, or can transmit information to the other functional units or to external destinations. The external sources and the external destinations refer to sources and destinations external to the second device 106.

The second storage interface 348 can include different implementations depending on which functional units or external units are being interfaced with the second storage unit 346. The second storage interface 348 can be implemented with technologies and techniques similar to the implementation of the second controller interface 344.

The second communication unit 336 can enable external communication to and from the second device 106. For example, the second communication unit 336 can permit the second device 106 to communicate with the first device 102 over the communication path 104.

The second communication unit 336 can also function as a communication hub allowing the second device 106 to function as part of the communication path 104 and not limited to be an end point or terminal unit to the communication path 104. The second communication unit 336 can include active and passive components, such as microelectronics or an antenna, for interaction with the communication path 104.

The second communication unit 336 can include a second communication interface 350. The second communication interface 350 can be used for communication between the second communication unit 336 and other functional units in the second device 106. The second communication interface 350 can receive information from the other functional units or can transmit information to the other functional units.

The second communication interface 350 can include different implementations depending on which functional units are being interfaced with the second communication unit 336. The second communication interface 350 can be implemented with technologies and techniques similar to the implementation of the second controller interface 344.

The first communication unit 316 can couple with the communication path 104 to send information to the second device 106 in the first device transmission 308. The second device 106 can receive information in the second communication unit 336 from the first device transmission 308 of the communication path 104.

The second communication unit 336 can couple with the communication path 104 to send information to the first device 102 in the second device transmission 310. The first device 102 can receive information in the first communication unit 316 from the second device transmission 310 of the communication path 104. The navigation system 100 can be executed by the first control unit 312, the second control unit 334, or a combination thereof. For illustrative purposes, the second device 106 is shown with the partition having the second user interface 338, the second storage unit 346, the second control unit 334, and the second communication unit 336, although it is understood that the second device 106 can have a different partition. For example, the second software 342 can be partitioned differently such that some or all of its function can be in the second control unit 334 and the second communication unit 336. Also, the second device 106 can include other functional units not shown in FIG. 3 for clarity.

The functional units in the first device 102 can work individually and independently of the other functional units. The first device 102 can work individually and independently from the second device 106 and the communication path 104.

The functional units in the second device 106 can work individually and independently of the other functional units. The second device 106 can work individually and independently from the first device 102 and the communication path 104.

For illustrative purposes, the navigation system 100 is described by operation of the first device 102 and the second device 106. It is understood that the first device 102 and the second device 106 can operate any of the modules and functions of the navigation system 100.

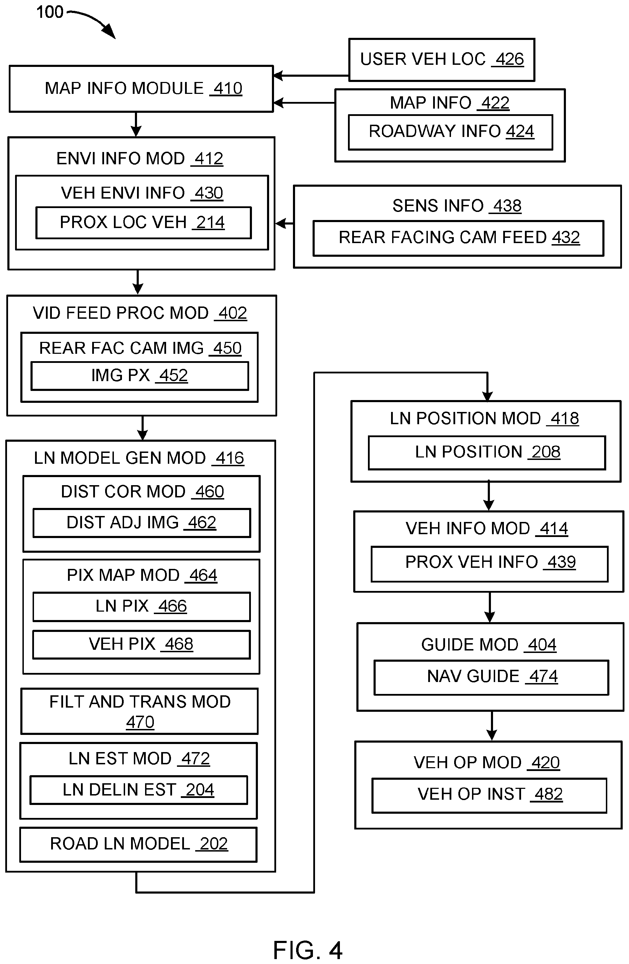

Referring now to FIG. 4, therein is shown a control flow of the navigation system 100. The control flow can be for generating the road lane model 202 and determining the lane position 208 of the user vehicle 212 of FIG. 2, which will be described below. The navigation system 100 can include a map information module 410, an environment information module 412, a video feed processing module 402, a lane model generation module 416, a lane position module 418, a vehicle information module 414, a guidance module 404, a vehicle operation module 420, or a combination thereof. As an example, the environment information module 412 can be coupled to the map information module 410; the video feed processing module 402 can be coupled to the environment information module 412; the lane model generation module 416 can be coupled to the video feed processing module 402; the lane position module 418 can be coupled to the lane model generation module 416; the vehicle information module 414 can be coupled to the lane model generation module 416; the guidance module 404 can be coupled to the vehicle information module 414; the vehicle operation module 420 can be coupled to the guidance module 404, or a combination thereof.

The map information module 410 is for receiving map information 422 corresponding to the position of the user vehicle 212. The map information 422 is information representing a geographic area. For example, the map information 422 can include information about travel infrastructure, such as roads and highways; specific location information, such as building addresses; geographic features, such as terrain, bodies of water, and topography; or a combination thereof. As a specific example, the map information 422 can include roadway information 424. The roadway information 424 are details about a particular roadway. For example, the roadway information 424 can be information about the current roadway 206 of FIG. 2. The roadway information 424 can include information, such as a lane count for the current roadway 206, which is a count of the number of lanes, an estimated width of the lanes, the existence and width of a road shoulder area, a total estimated width of the roadway, a speed limit, or a combination thereof.

The map information module 410 can utilize a user vehicle location 426, which is the geographic or physical location of the user vehicle 212, to determine the map information 422. For example, the map information module 410 can interface with the location unit 320 of FIG. 3 of the first device 102 to determine the user vehicle location 426, such as the GPS coordinates or the longitude and latitude representing the current location of the user vehicle 212. To continue the example, the map information module 410 can utilize the user vehicle location 426 to get the map information 422 for the geographic area around the user vehicle 212.

The map information module 410 can receive the map information 422 from various sources. For example, the map information module 410 can receive the map information 422 stored in the first storage unit 314 of FIG. 3 of the first device 102. In another example, the map information module 410 can receive the map information 422 from a device other than the first device 102, such as an external storage unit or server, the second storage unit 342 of FIG. 3, or a combination thereof.

The control flow can pass to the environment information module 412. The environment information module 412 is for collecting information about the environment around the user vehicle 212. For example, the environment information module 412 can collect vehicle environment information 430, which is information regarding objects external to and surrounding the user vehicle 212.

In another implementation, the environment information module 412 can collect the vehicle environment information 430 as sensor information 438. For example, the environment information module 412 can collect the vehicle environment information 430 by sending commands or requests to a sensor unit to take various readings, which can be transmitted back to the environment information module 412 as the sensor information 438.

The sensor unit can be a device that includes sensors and detection instruments. For example, the sensor unit can include one or more instruments or sensors, such as a camera, a microphone, an infrared detector, a radar detector, a LIDAR unit, or a combination thereof As a specific example, the sensor unit can include the rear facing camera 230 of FIG. 2 of the user vehicle 212. The rear facing camera 230 can include the field of view 232 of FIG. 2 that faces away from the rear of the user vehicle 212, for example, as illustrated and described in FIG. 2. Further, the field of view 232 for the rear facing camera 230 can include a view of a portion of the current roadway 206 of FIG. 2 on which the user vehicle 212 is currently traveling.

The sensor unit can include instruments and sensors attached to or integrated with the user vehicle 212 or external to the user vehicle 212, such as sensors or instruments mounted on the side of the road. For example, the sensor unit of the rear facing camera 230 can be mounted to the back or rear of the user vehicle 212 or integrated with a part of the body of the rear of the user vehicle 212.

The sensor information 438 can be information recorded or measured by sensors or instruments, such as the sensor unit, about the area or environment surrounding the user vehicle 212. The vehicle environment information 430, including the sensor information 438, can include various types of information regarding objects surrounding the user vehicle 212 and can be provided in a number of different formats and states. For example, the sensor information 438 can include a rear facing camera feed 432, which is a raw or unprocessed video stream captured by the rear facing camera 230.

The environment information module 412 can collect the vehicle environment information 430 in a number of ways. For example, in the environmental information module 412 can access the application programming interface (API) of the rear facing camera 230 for the rear facing camera feed 432. As a specific example, the environmental information module 412 can implement the first communication unit 316 to interface or communicate with the rear facing camera 230 to access the rear facing camera feed 432. In some embodiments, the environmental information module 412 access the rear facing camera feed 432 based on the GPS signal strength at the current location of the user vehicle 212. For example, the environmental information module 412 can interface with the location unit 320 of FIG. 3 to monitor the GPS signal strength at periodic intervals and evaluate the GPS signal strength relative to a signal strength threshold. The signal strength threshold can be a value that indicates the GPS signal strength that would prevent transmission that is consistent, accurate, or a combination thereof for providing GPS based guidance, such as when the GPS signal is lost, also referred to as a limited or weak signal strength. If the GPS signal strength drops below the signal strength threshold, which indicates the limited or weak signal strength, the environmental information module 412 interface the API of the rear facing camera 230 to receive the rear facing camera feed 432. In some embodiments, the environmental information module 412 can continue receiving the rear facing camera feed 432 until the GPS signal strength increases above the signal strength threshold.

The control flow can pass to the video feed processing module 402. The video feed processing module 402 is for processing the rear facing camera feed 432. In some embodiments, processing of the rear facing camera feed 432 can include calibration of the rear facing camera 230, selective extraction of images from the rear facing camera feed 432, or a combination thereof.

In some implementations of the video feed processing module 402, the calibration of the rear facing camera 230 can include determining the perspective view of the rear facing camera 230 based on the position of the rear facing camera 230 on the rear of the user vehicle 212, the angle of the rear facing camera 230, and other factors that can be specific to the position, location, or orientation of the rear facing camera 230.

In some embodiments of the video feed processing module 402, selective conversion of the images from the rear facing camera feed 432 can include controlling a conversion rate of the rear facing camera feed 432 to rear facing camera images 450. The rear facing camera images 450 are a series of sequential images from the rear facing camera feed 432. Each of the rear facing camera images 450 can include image pixels 452.

As an example, in some embodiments, the conversion rate of the rear facing camera feed 432 can be a static rate, such that the rear facing camera images 450 are converted from the rear facing camera feed 432 at a consistent interval. As another example, in some embodiments, controlling of the conversion rate of the rear facing camera feed 432 can be dynamically adjusted such that the interval at which the rear facing camera images 450 are converted can change based on triggering factors. More specifically, the video feed processing module 402 can increase or decrease the conversion rate of the rear facing camera feed 432 when the triggering factors are detected. Examples of the triggering factors can be the approach of the proximately located vehicle 214, changes or shifting of the position of the use vehicle 212, changes in the current roadway 206, or a combination thereof. One or more of the rear facing camera images 450 can be used by the navigation system 100 to generate the road lane model 202.

The control flow can pass to the lane model generation module 416. The lane model generation module 416 is for generating the road lane model 202. The lane model generation module 416 can generate the road lane model 202 as a localized model relative to the vehicle location 426 of the user vehicle 212. In an embodiment, the lane model generation module 416 can generate the road lane model 202 based on the sensor information 438, and more specifically, the rear facing camera images 450 converted from the rear facing camera feed 432.

For example, the lane model generation module 416 can generate the road lane model 202 through implementation of one or more functions, processes, or a combination thereof on the rear facing camera images 450. Examples of the functions and processes for generating the road lane model 202 can include, distortion correction, pixel mapping, filtering and transformation, lane estimation, or a combination thereof.

The lane generation module 416 can perform the distortion correction function with a distortion correction module 460. The distortion correction module 460 is for adjusting or correcting for distortions of an image. For example, the distortion correction module 460 can generate distortion adjustment rear facing images 462 from the rear facing camera images 450 to account for distortions due to the rear facing camera 230. The distortions due to the rear facing camera 230 can, for example, include distortions due to lens effects, such as "fish bowl" effects, where lines or edges that appear curved in the rear facing camera images 450 are actually straight in the real world. In some embodiments, the distortion correction module 460 can perform or implement a distortion correction process to adjust, resize, re-position, re-map, or a combination thereof the image pixels 452 of the rear facing camera images 450 to generate the distortion adjustment rear facing images 462.

The lane generation module 416 can perform the pixel mapping function with a pixel mapping module 464. The pixel mapping module 464 is for characterizing pixels in an image. For example, the pixel mapping module 464 can correlate the image pixels 452 to detectable object representations, which are portions of the distortion adjusted rear facing images 462 that represent objects in the real world, such as the proximately located vehicle 214 of FIG. 2, the lane markings for the lane in the current roadway 206, and other objects or structures represented in the distortion adjusted rear facing images 462.

In some implementations, the pixel mapping module 464 can implement an object recognition process to identify groupings of pixels that represent objects in the real world. For example, the pixel mapping module 464 can implement the object recognition process to correlate specific instances of the image pixels 452 or groupings of the image pixels 452 in the distortion adjustment rear facing images 462 representing the lane markings of the current roadway 206, such as painted lane markings, raised pavement markers, reflective lane markers, or a combination thereof. The image pixels 452 representing the lane markings can be referred to as the lane pixels 466.

Similarly, the pixel mapping module 464 can implement the object recognition process to correlate the image pixels 452 or the groupings of the image pixels 452 in the distortion adjustment rear facing images 462 that represent the proximately located vehicles 214, referred to as vehicle pixels 468, the static structures, or a combination thereof. For example, the vehicle pixels 468 can be identified using the object recognition process as corresponding to the vehicle type of the proximately located vehicles 214. The vehicle type can be general category of vehicle such as a bicycle, a motorized scooter, a motorcycle, a car, truck, a sport utility vehicle, a van, a bus, a recreational camper vehicle, a tractor trailer, or other general vehicle classification. As a specific example, the pixel mapping module 464 can determine the vehicle type based on the shape, size, profile, or a combination thereof for the vehicle pixels 468.

The pixel mapping module 464 can store the correlations or mappings for the lane pixels 466, the vehicle pixels 468, or other identified grouping of the image pixels 452. For example, the lane pixels 466, the vehicle pixels 468, or other identified grouping of the image pixels 452 can be stored in the first storage unit 314 of FIG. 3, the second storage unit 346, or a combination thereof.

The lane generation module 416 can perform the filtering and transformation function with a filtering and transformation module 470. The filtering and transformation module 470 is for applying filters, performing transformations, or a combination thereof on the image. For example, the filtering and transformation module 470 can update the distortion adjustment rear facing images 462 by implementing filtering functions, transformation functions, or a combination thereof. The filtering function can, for example, include applying gradient filters to the distortion adjustment rear facing images 462. The transformation function can, for example, include color transformations to highlight the lane pixels 466.

The lane model generation module 416 can perform the lane estimation function with a lane estimation module 472. The lane estimation module 472 is for generating the lane delineation estimations 204. The lane estimation module 472 can generate the lane delineation estimations 204 based on the lane pixels 466. In one implementation, the lane estimation module 472 can include an image warping function for application to the distortion adjustment rear facing images 462. The image warping function can modify the distortion adjustment rear facing images 462 according to a polynomial fit of the lane pixels 466. As a specific example, the image warping function can include a 2nd degree or 3rd degree polynomial fit of the lane pixels 466, which can be used by the lane estimation module 472 as the lane delineation estimations 204.

Returning to the lane model generation module 416, the road lane model 202 can be generated based on the lane delineation estimations 204. For example, the lane model generation module 416 can calculate the curvature of the lane delineation estimations 204, the number of lanes in the road lane model 202, the lane area for each of the lane delineation estimations 204, or a combination thereof. In general, the lane model generation module 416 can generate the road lane module 202 based solely or primarily based on the sensor information 438, and in particular, the distortion adjustment rear facing images 462.

However, in some embodiments, the lane model generation module 416 can generate the road lane model 202 as a combination of the map information 422 and the lane delineation estimations 204, both corresponding to the user vehicle location 426 of the user vehicle 212. For example, the lane model generation module 416 can use the roadway information 424, such as the lane count of the roadway lanes, the roadway lane width, the total roadway width, or a combination thereof, to supplement or verify the lane delineation estimations 204. As a specific example, the lane model generation module 416 can verify the position or alignment of the lane delineation estimations 204 from the roadway information 424 in real time based on comparison to physical features of the roadway according to the roadway information 424. Examples of the physical features of the roadway including gaps or edges between concrete or paved segments; metallic rails for trolleys or cable cars that embedded or integrated with the road way; changes in or transitions between the road surface such as from an asphalt, concrete, or paved surface to a gravel or unpaved surface which generally exist along the edge of a roadway; or a combination thereof.

In some embodiments, the model generation module 416 can validate the road lane model 202 based on comparison to supplemental road models. The supplemental road models are instances of the road lane model 202 generated from data other than processing of the rear facing camera feed 432. For example, the supplemental road models can be generated based on GPS information, dead reckoning information, map information attributes, such as lane count, lane curvature, road width, road features including lane dividers or barriers, or a combination thereof The model generation module 416 can determine that the road lane model 202 is valid when the elements of the road lane model 202 match with corresponding elements in one or more of the supplemental road models. In the case that the model generation module 416 determines that the road lane model 202 is valid, the control flow can proceed to determining the lane position 202 and generate the navigation guidance 474 as described in the modules below. In the case that the model generation module 416 determines that the road lane model 202 is not valid, the model generation module 416 can discard the current iteration of the road lane model 202 and provide a notification that no current or updated position refinement based on the rear view camera feed 432 is available.

The control flow can pass to the lane position module 418. The lane position module 418 is for calculating the lane position 208 of the user vehicle 212. As an example, the lane position module 418 can calculate the lane position 208 of the user vehicle 212 on the current roadway 206 based on the position of the user vehicle 212 relative to the lane delineation estimations 204 of the road lane model 202.

The control flow can pass to the vehicle information module 414. The vehicle information module 414 is for determining proximate vehicle information 439 for the proximately located vehicles 214. For example, in some implantations, the vehicle information module 414 can determine the proximate vehicle information 439 based on vehicle pixels 468. As a specific example, the vehicle information module 414 can use the vehicle pixels 468 between the distortion adjustment rear facing images 462 to determine or calculate the proximate vehicle information 439, such movement heading, speed, acceleration, deceleration, movement patterns, physical location, position, shape, size, or any combination thereof. More specifically, the vehicle information module 414 can calculate a relative position, a relative distance, a vehicle speed, a vehicle trajectory, or a combination thereof for the proximately located vehicles 214 based on the changes in the location of vehicle pixels 468 between the distortion adjustment rear facing images 462.

The control flow can pass to the guidance module 404. The guidance module 404 is for providing navigation guidance 474 based on the road lane model 202, the lane position 208 of the user vehicle 212, the proximately located vehicles 214, or a combination thereof. For example, the guidance module 404 can provide the navigation guidance 474 as blind spot assistance for when an instance of the proximately located vehicles 214 approaching from the rear of the user vehicle 212 and with the lane position 208 that is adjacent to that of the user vehicle 212 enters a region that corresponds to a blind spot for the operator of the user vehicle 212. To further the example, the navigation guidance 474 can include a warning for the operator of the user vehicle 212, particularly when the user vehicle 212 is initiating or engaging in a lane change maneuver when the proximately located vehicle 214 is detected in the blind spot of the user vehicle 212.

As another example, guidance module 404 can provide the navigation guidance 474 as lane level navigation instructions that account for the lane position 208 of the user vehicle 212 according to the road lane model 202. In a further example, the guidance module 404 can provide the navigation guidance 474 as a notification or warning to the operator of the user vehicle 212 based on lateral shifts in the lane position 208 of the user vehicle 212 that indicates drifting form the current instance of the lane position 208, which can include the warning or notification when the operator of the user vehicle does not activate the vehicle turn signal.

In a further example, the guidance module 404 can use the lane position 208 and the road lane model 202 to determine whether the user vehicle 212 is following or deviating from navigation instructions. For example, the guidance module 404 can determine whether the user vehicle 212 took a particular road segment at a fork in the road, such as at a roadway junction, roadway entrance, or roadway exit, which can be beneficial in improving accuracy in determining the current position of the user vehicle 212 particularly when the GPS signal strength is determined to be weak or inaccurate (such based on the signal strength threshold described above).

In some embodiments, the navigation system 100 can implement the road lane model 202, the lane position 208, or a combination thereof for operation of the user vehicle 212 with the vehicle operation module 420. The vehicle operation module 420 is for generating vehicle operation instructions 480. The vehicle operation instructions 480 can be commands to manipulate mechanical and electronic systems in the user vehicle 212 in order to execute driving maneuvers, such as distance control, speed control, acceleration, braking, or turning. For example, the vehicle operation module 420 can generate the vehicle operation instructions 480 to control essential vehicle control functions of the user vehicle 212, such as a throttling system, a steering system, a braking system, or a combination thereof.

The vehicle operation instructions 480 can be instructions for autonomous operation of the user vehicle 212. During autonomous operation of the user vehicle 212, autonomous vehicle operation system can control one or more essential vehicle control functions of the user vehicle 212 with partial or no intervention or actions by the system user of the user vehicle 212.

The vehicle operation module 420 can generate the vehicle operation instructions 480 based on the road lane model 202 during autonomous operation of the user vehicle 212. For example, the vehicle operation instructions 480 can direct the autonomous vehicle operation system to maintain or change the lane position 208 based the lane delineation estimations 204.

It has been discovered that the navigation system 100 provides improved operation safety of the user vehicle 212. The navigation interface 216 can provide the road lane model 202 with the lane delineation estimations 204 that are accurate, dynamic, or a combination thereof based on the lane pixels 466 of the distortion adjustment rear facing images 462 that account for the changes in the environment around the user vehicle 212, which improves safety in operating the user vehicle 212.

The navigation system 100 has been described with module functions or order as an example. The navigation system 100 can partition the modules differently or order the modules differently. For example, the map information module 410 can be coupled to the lane model generation module 416.

For illustrative purposes, the various modules have been described as being specific to the first device 102 or the second device 106. However, it is understood that the modules can be distributed differently. For example, the various modules can be implemented in a different device, or the functionalities of the modules can be distributed across multiple devices. Also as an example, the various modules can be stored in a non-transitory memory medium.

As a more specific example, one or more modules described above can be stored in the non-transitory memory medium for distribution to a different system, a different device, a different user, or a combination thereof, for manufacturing, or a combination thereof. Also as a more specific example, the modules described above can be implemented or stored using a single hardware unit, such as a chip or a processor, or across multiple hardware units.

The modules described in this application can be hardware implementation or hardware accelerators in the first control unit 316 of FIG. 3 or in the second control unit 338 of FIG. 3. The modules can also be hardware implementation or hardware accelerators within the first device 102 or the second device 106 but outside of the first control unit 316 or the second control unit 338, respectively, as depicted in FIG. 3. However, it is understood that the first control unit 316, the second control unit 338, or a combination thereof can collectively refer to all hardware accelerators for the modules.

The modules described in this application can be implemented as instructions stored on a non-transitory computer readable medium to be executed by a first control unit 312, the second control unit 336, or a combination thereof. The non-transitory computer medium can include the first storage unit 314 of FIG. 3, the second storage unit 346 of FIG. 3, or a combination thereof. The non-transitory computer readable medium can include non-volatile memory, such as a hard disk drive, non-volatile random access memory (NVRAM), solid-state storage device (SSD), compact disk (CD), digital video disk (DVD), or universal serial bus (USB) flash memory devices. The non-transitory computer readable medium can be integrated as a part of the navigation system 100 or installed as a removable portion of the navigation system 100.

The physical transformation from determining the lane position 208 of the user vehicle 212 results in the movement in the physical world, such as maneuvering the user vehicle 212 based on the lane delineation estimations 204. Movement in the physical world, such movement of the user vehicle 212 in response to the proximately located vehicles 214, results in changes to the road lane model 202 by updating the lane delineation estimations 204.

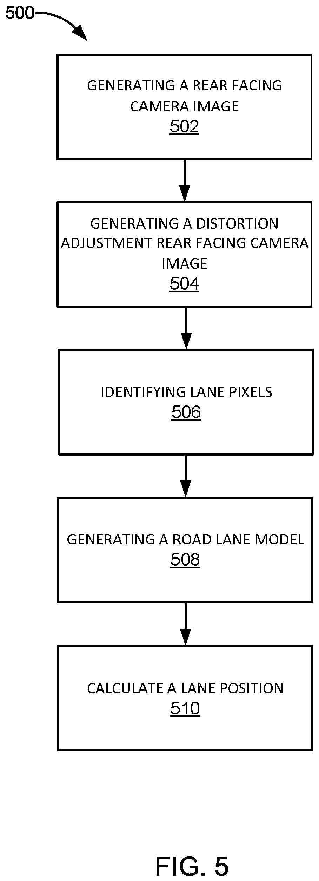

Referring now to FIG. 5, therein is shown a flow chart of a method 500 of operation of a navigation system 100 in an embodiment of the present invention. The method 500 includes: generating a rear facing camera image representing a field of view of the rear facing camera including a current roadway on which the user vehicle is traveling in a block 502; generating a distortion adjustment rear facing image based on the rear facing camera image in a block 504; identifying lane pixels based on correlation of image pixels of the distortion adjustment rear facing image to lane markings of the current roadway in a block 506; generating a road lane model including a lane delineation estimation based on the lane pixels in a block 508; and calculating a lane position for the user vehicle according to the lane delineation estimation in a block 510.

The resulting method, process, apparatus, device, product, and/or system is straightforward, cost-effective, uncomplicated, highly versatile, accurate, sensitive, and effective, and can be implemented by adapting known components for ready, efficient, and economical manufacturing, application, and utilization. Another important aspect of an embodiment of the present invention is that it valuably supports and services the historical trend of reducing costs, simplifying systems, and increasing performance.

These and other valuable aspects of an embodiment of the present invention consequently further the state of the technology to at least the next level.

While the invention has been described in conjunction with a specific best mode, it is to be understood that many alternatives, modifications, and variations will be apparent to those skilled in the art in light of the aforegoing description. Accordingly, it is intended to embrace all such alternatives, modifications, and variations that fall within the scope of the included claims. All matters set forth herein or shown in the accompanying drawings are to be interpreted in an illustrative and non-limiting sense.

## Claims

1. A navigation system (100) comprising:
a communication unit (316) configured to communicate with a rear facing camera (230) of a user vehicle (212); and
a control unit (312), coupled to the communication unit (316), configured to:
generate a rear facing camera image (450) representing a field of view (232) of the rear facing camera (230) including a current roadway (206) on which the user vehicle (212) is traveling;
generate a distortion adjustment rear facing image (462) based on the rear facing camera image (450);
identify lane pixels (466) based on correlation of image pixels (452) of the distortion adjustment rear facing image (462) to lane markings of the current roadway (206);
generate a road lane model (202) including a lane delineation estimation (204) based on the lane pixels (466); and
calculate a lane position (208) for the user vehicle (212) according to the lane delineation estimation (204).

2. The system (100) as claimed in claim 1 wherein the control unit (312) is configured to update the distortion adjustment rear facing image (462) based on application of filters, performing of transformations, or a combination thereof on the distortion adjustment rear facing image (462).

3. The system (100) as claimed in claim 1 or 2, wherein the control unit (312) is configured to identify a representation of a proximately located vehicle (214) relative to the user vehicle (212) based on the distortion adjustment rear facing image (462).

4. The system (100) as claimed in any of the preceding claims, wherein the control unit (312) is configured to generate navigation guidance (474) based on the road lane model (202), the lane position (208) of the user vehicle (212), or a combination thereof.

5. The system (100) as claimed in any of the preceding claims, wherein the control unit (312) is configured to generate the road lane model (202) during operation of the user vehicle (212).

6. A method (500) of operation of a navigation system comprising:
generating a rear facing camera image (450) representing a field of view (232) of the rear facing camera (230) including a current roadway (206) on which the user vehicle (212) is traveling;
generating a distortion adjustment rear facing image (462) based on the rear facing camera image (450);
identifying lane pixels (466) based on correlation of image pixels (452) of the distortion adjustment rear facing image (462) to lane markings of the current roadway (206);
generating a road lane model (202) including a lane delineation estimation (204) based on the lane pixels (466); and
calculating a lane position (208) for the user vehicle (212) according to the lane delineation estimation (204).

7. The method (500) as claimed in claim 6 further comprising updating the distortion adjustment rear facing image (462) based on application of filters, performing of transformations, or a combination thereof on the distortion adjustment rear facing image (462).

8. The method (500) as claimed in claim 6 or 7, further comprising identifying a representation of a proximately located vehicle (214) relative to the user vehicle (212) based on the distortion adjustment rear facing image (462).

9. The method (500) as claimed in any of the claims 6 to 8, further comprising generating navigation guidance (474) based on the road lane model (202), the lane position (208) of the user vehicle (212), or a combination thereof.

10. The method (500) as claimed in any of the claims 6 to 9, wherein generating the rear facing camera image (450) includes generating the rear facing camera image (450) based on conversion from a rear facing camera feed (432).

11. The method (500) as claimed in any of the claims 6 to 10, wherein generating the road lane model (202) includes generating the road lane model (202) during operation of the user vehicle (212).

12. A computer program comprising computer-readable instructions adapted to implement, when read on a computer, a method according to any of the claims 6 to 11.
